# EUROPEAN PATENT SPECIFICATION

(11) **EP 2 403 236 B1**
(45) Date of publication and mention of the grant of the patent: **11.12.2013**
(21) Application number: 10167720.1
(22) Date of filing: 29.06.2010
(51) Int. Cl.: G11B 27/034, G11B 27/10, H04N 21/218, H04N 21/4223, H04N 21/472, H04N 5/262, H04N 5/28, H04N 7/18

(54) **Mobile video mixing system**
Mobiles Videomischsystem
Système de mixage vidéo mobile

(43) Date of publication of application: 04.01.2012
(73) Proprietor: Stockholms Universitet Holding AB, 106 91 Stockholm (SE)
(72) Inventor: Engström, Arvid, 112 62 Stockholm (SE); Juhlin, Oskar, 125 58 Älvsjö (SE); Toussi, Ramin, 170 70 Solna (SE); Adler, Måns, 211 21 Malmö (SE)
(74) Representative: Kitzler, Michael

(56) References cited:
- EP-A1- 2 117 231
- EP-A2- 1 549 068
- US-A1- 2009 085 740
- US-A1- 2009 148 124
- A. ENGSTRÖM, M. ESBJÖRNSSON, O. JUHLIN: "Mobile Collaborative Live Video Mixing" PROCEEDINGS OF THE 10TH INTERNATIONAL CONFERENCE ON HUMAN COMPUTER INTERACTION WITH MOBILE DEVICES AND SERVICES 2 September 2008 (2008-09-02), 5 September 2010 (2010-09-05), pages 157-166, XP002601950 ISBN: 978-1-59593-952-4 Retrieved from the Internet: URL:http://portal.acm.org/ft_gateway.cfm?i d=1409258&type=pdf&coll=GUIDE&dl=GUIDE&CFI D=102958737&CFTOKEN=55949560 [retrieved on 2010-09-21]
- GRASS VALLEY: "Kalypso User Manual, Version 11.0 (071-0618-12)", INTERNET CITATION, March 2005 (2005-03), XP002433704, Retrieved from the Internet: URL:http://www.thomsongrassvalley.com/docs /Manuals/switchers/kalypso/071-0618-12.pdf [retrieved on 2007-04-02]

## Description

### TECHNICAL FIELD OF INVENTION:

The disclosed invention generally relates to mobile devices with video display capabilities. In particular, the invention relates to mobile devices that enable a user to select and broadcast a video stream out of multiple video streams that are combined in to a single video signal (stream) and displayed on the mobile device.

### BACKGROUND OF INVENTION:

With the ever increasing popularity of large scale public events, such as, team based sports, public functions, etc., the presentation of live video coverage of such events has become a competitive area for broadcasters and video directors. Due to the live-ness of the event (and depending upon the rules of a multi-team player game), its location, duration and other factors, the video production team members have to coordinate their efforts so as to cover the event in a meaningful way. In most events, the totality of the action may be distributed over a large area or the event may be too fast to be covered from one angle, and thus demands a combination of coverage from selected vantage points and close-up cameras fluidly following the event.

Each such camera would capture the event from one or more angles and transmit one video streams to a centralized video server. The centralized video server receives and displays the video streams onto a comprehensive display system that includes multiple screens to view multiple video streams.

The video production of live events involves a degree of spontaneous selection in which a video director watches the array of multiple screens and spontaneously chooses and switches between sources. The video director may also perform edit operations on the video streams and request the video server to broadcast the edited video stream to a target group of users. The edit operations may include, switching between video streams (effectively the camera angles), and modifying the output parameters, such as, contrast, hue, saturation, gamma correction, etc.

Many advancements in the graphics processing technology and Very Large Scale Integration (VLSI) technology made it possible to display multimedia content on a mobile device with limited display area and resolution. Such mobile devices support various screen resolutions (VGA, XVGA etc.) and have the capability of displaying one video signal at a time. With such mobile devices, the video directors can move about in a given area enjoying the benefits of wireless networks (e.g. 3G) and perform the mixing and editing functions while on the move.

Video production in such a scenario demands a collaborative approach and calls for a mobile application that provides the video director with options required for an efficient video direction. The technical editing of video streams builds on the capabilities of recent computing developments such as powerful multimedia capabilities, high bandwidth data communication, mobile, wireless, and video-enabled devices.

Nevertheless, the video production processes needs improved methods and systems for a more interactive, collaborative environment due to the "live" nature of captured events, and multi-camera video broadcasts.

Existing system architecture for mobile video mixing includes a mobile client device (e.g. Symbian S60) that captures a video stream from a built-in camera and streams it over TCP/IP or 3G network. The system architecture also includes a video server that receives the incoming video streams from the mobile client device. The system further includes a laptop computer that executes a mixer program that receives and displays the video stream from the video server on a screen or a setup of multiple screens. The mixer program GUI includes preview windows of the incoming streams and controls for a basic set of mixing functionalities and effects such as brightness, contrast and hue controls, and tools for spatial montage. The interface also contains an output window, equivalent to a program monitor, which can be set to full screen mode or output to a separate screen.

The mixing in the existing systems is performed in a desktop environment. Therefore, the existing system does not provide for the option to mix video streams and select a video stream from different video streams on a handheld device. Furthermore, the existing system requires a complex setup procedure and additional hardware to broadcast the edited video stream, making it less feasible as a mobile collaborative system in the settings described above. In addition, existing video mixing techniques in mobile devices only enable offline editing and do not support interactive selection of a live video stream from a preview of multiple video streams.

Hence, there is a well felt need for a mobile video method and system that addresses at least the above mentioned shortcomings.

### SUMMARY OF THE INVENTION

Exemplary systems and methods are disclosed for mixing of video streams in a collaborative mobile environment. In an embodiment, method for mobile video mixing includes receiving a plurality of video streams at a mobile device corresponding to one or more cameras capturing an event. The one or more cameras can be operated by one or more camera operators who capture and broadcast video streams from multiple locations at the venue of the event. The event may correspond to a live team-based sports or a public event. The method further includes choosing a group of video streams intended to be previewed at the mobile device. In a successive progression, the group of video streams are combined to generate a combined video streams such that the combined video signal provides a simultaneous preview of the group of video signals when displayed on the display of the mobile device. A user (e.g. video director) can then select a video stream from the simultaneous preview of group of video streams and send a request for a broadcast of the selected video stream.

These and other advantages and features of the present invention will become more apparent from the following description and appended claims, or may be learned by the practice of the invention as set forth hereinafter.

### BRIEF DESCRIPTION OF DRAWINGS

To further clarify the above and other advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings in which:
Fig. 1 illustrates a collaborative environment (architecture) that implements mobile mixing system in an embodiment;
Fig. 2 illustrates an embodiment of mobile mixing system;
Fig. 3 illustrates a simplified block diagram of video combiner and switching component in mobile mixing system according to an embodiment;
Fig. 4 illustrates an example embodiment of mobile application executing in mobile device;
Fig. 5 illustrates a combined video signal (stream) when displayed on a mobile device according to an embodiment;
Fig. 6 illustrates an exemplary method for mobile video mixing.

### DETAILED DESCRIPTION OF THE INVENTION

Embodiments of methods and systems for collaborative mobile video mixing are disclosed. Increasing popularity of "live" large scale events, such as, football, ice hockey, etc. has led to advancements in video production technologies. Such advancements allow TV viewers across the globe to enjoy a seamless broadcast of live events. The viewing experience is made more enjoyable and exciting by providing a seamless series of video streams captured from different angles. Such capturing is made possible by means of multiple cameras covering one or more prime points in the venue of the event. The video feeds from all the cameras are provided for video mixing which is typically performed by a video director.

In the conventional systems, video mixing is generally performed in a separate room where all the video feeds are received from one or more camera operators and displayed on an array of monitors. A video director views the different video feeds and combines them suitably to provide the best viewing experience to users who view the broadcast coverage of the video. An existing system allows the video director to execute software on mobile computing device, such as a laptop, to exercise control options such as brightness, contrast and hue controls, tools for spatial montage, and basic set of mixing functionalities. However, current mobile technologies do not support truly mobile use, for several reasons. It relies on a laptop computer as a central node, and does not support mixing on a mobile handset, making it less useful in many naturalistic event contexts. Furthermore, they require a complex setup procedure and do not support live broadcasting without additional hardware. Since most of the events that require multiple cameras are live, the video mixing needs to be performed on the fly without the user knowing of any processing during the viewing.

### Exemplary Collaborative mobile environment

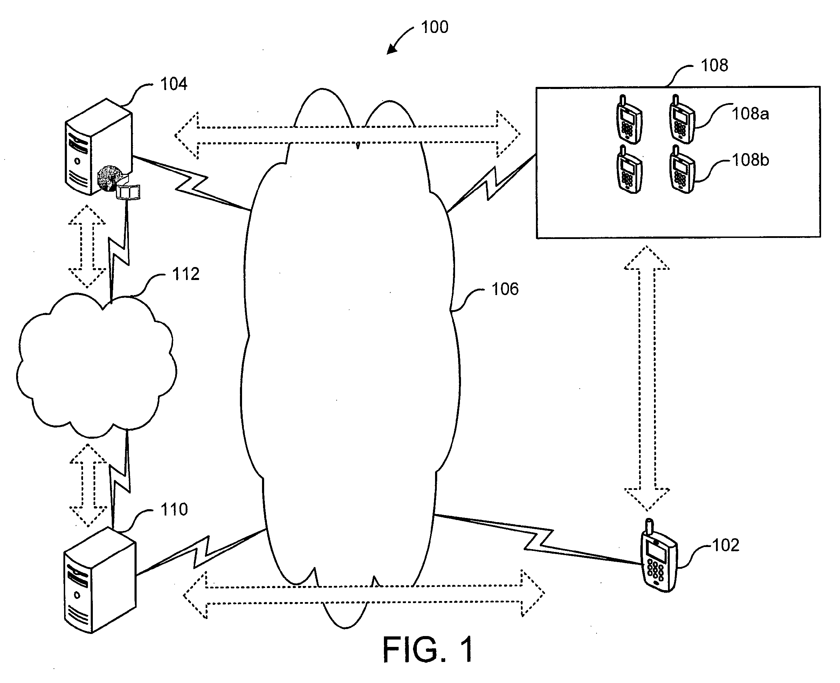

Fig. 1 illustrates a collaborative mobile environment 100 for video mixing according to an embodiment. As shown, the architecture 100 includes a mobile device 102 in wireless communication with a video server 104 via. a 3^{rd} Generation network (3G) 106. The mobile device 102 may be a handheld portable computing device such as, but not limited to, a cellular phone, a personal digital assistant (PDA), a laptop, a notebook PC, and the like, that has wireless communication capabilities and has in-built display supported by advanced video processing capabilities.

The video server 104 can correspond to one or more servers or a server farm configured to receive, store, transmit and broadcast one or more video streams. In an embodiment, the video server 104 may be a commercial service provider that enables mobile users to share live or recorded video streams with one or more intended recipients. An example of one such service provider can be Bambuser™ that lets a mobile user to instantly share live video streams, chat with one or more intended recipients on a variety of social networking platforms.

The 3G network 106 include one or more of Wide Area Network (WAN), Metropolitan Area Network (MAN), Wireless Local Area Networks (WLAN conforming to IEEE 802.11 standards), and WiMAX (IEEE 802.16).

The collaborative mobile environment 100 further includes a group of camera operators 108 in wireless communication with the video server 104. The camera operators 108 have one or more cameras (108a, 108b) to capture and broadcast multiple video streams to the video server 104. Further, the architecture 100 includes a mobile mixing system 110 in wireless communication with the video server 104 via. a hyper text transfer protocol (HTTP) based network 112. In an embodiment, the mobile device 102 communicates with the camera operators 108 and the mobile mixing system 110 via. the 3G network 106.

As seen in the figure, on one side of the architecture 100, lies the video server 104 that may be regarded as the primary source of video streams interacting through the 3G network 106 with the camera operators 108 and with the mobile mixing system 110 through the HTTP based network 112 respectively. On the other side of the architecture 100 lies, the mobile device 102 that hosts a mobile application (not shown) also referred to as "vision mixer" in this description, which is the main scene coordinator. Vision mixer can be a mobile application (e.g. J2ME, Android, or Flash application) which enables a mobile user (e.g. a video director) to view the live feeds from the video server 104.

In operation, the camera operators 108 start filming and broadcasting one or more video streams (feeds) to the video server 104. The mobile application in the mobile device 102 enables the video director to view the video feeds from the video server 104. It may be appreciated that all modem day mobile devices 102 come with an inbuilt display screen that can be used to display multimedia files, such as, videos, images, etc. The mobile application lets the video director chooses a group of video streams to be combined for an intended preview on the display of the mobile device 102. Upon selection of the group of video streams, the mobile application sends a request to the mobile mixing system 110. In an implementation, the request includes information associated with the group of video streams to be combined. The mobile application can be configured to notify the selected camera operators (corresponding to the group of video streams) to stay "on shot".

Upon receipt of the request from the mobile application, the mobile mixing system 110 requests and fetches the selected group of video streams from the video server 104. The mobile mixing system 110 combines the group of video streams to generate a combined video signal (stream). Subsequently, the mobile mixing system 110 sends the combined video signal to the video server 104.

The mobile mixing system 110 also sends a notification to the mobile application hosted in the mobile device 102 so that the mobile user (video director) can update the view on the mobile device 102. The mobile application enables the user to request, fetch the combined video signal (combined stream) from the video server 104 and simultaneously preview the combined video stream on the display screen of the mobile device 102. The user chooses a video stream to be broadcasted from the previewed combined video signal on the display. The mobile application sends a notification to the mobile mixing system with details regarding the selected video stream. Concurrently, the mobile application also notifies the camera operator (e.g. 108a) corresponding to the selected video stream about the "on air" status of the video stream.

On receipt of the notification, the mobile mixing system 110 fetches the selected video stream and communicates the selected video stream to the video server 104 for broadcast.

### Exemplary Mobile Mixing system:

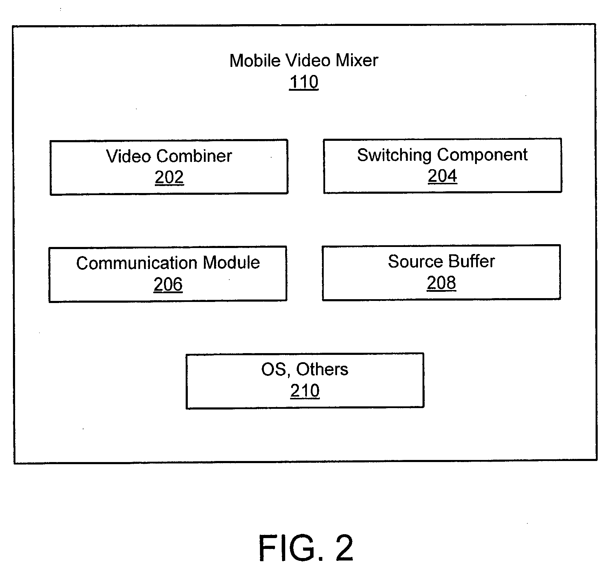

Fig. 2 illustrates a mobile mixing system 110 according to an embodiment of the invention. The mobile mixing system 110 can be implemented as a combination of applications, modules, and components that collaboratively perform the mixing functions. The mobile mixing system 110 includes a video combiner 202, a switching component 204, a communication module 206, a source buffer 208, and other supporting application software 210.

The video combiner 202 is configured to combine a group of video streams to generate a combined video signal. The combined video signal when displayed on a display of the mobile device 102 provides a simultaneous preview of the group of video streams. In an example embodiment, the video combiner 202 handles the video mixing commands by stitching the selected video streams together as a cross and broadcast the combined output to video server 104 using Flash Media Encoder (FME, a proprietary software from Adobe systems).

The switching component 204 switches between different channels, each channel corresponding to different video streams. The switching component 204 is configured to select a video stream from the group of video streams. In an embodiment, the switching component 204 performs the switching operation between a plurality of video streams based on a selection by the mobile user from a simultaneous preview of the combined video stream on the display of the mobile device 102.

The switching component 204 changes the channel of video stream being broadcasted to the video server 104 upon receiving a "selectChannel" command from the mobile application. Such a request is communicated to the mobile mixing system 210 via. a web service application. The switching component 204 utilizes Flash Media Encoder (FME) (a proprietary software from Adobe systems) to broadcast the final output. In one of the implementations, the switching component 204 may put the group of video streams over each other in layers. A desired one (selected one) of the group of video streams can be brought up to front covering all other video streams. The top most video stream, in such an implementation, would always have its audio stream available while the others video streams are muted. It may be appreciated that the switching functionality may be achieved in other ways well known in the art without departing from the scope of the ongoing description.

The communication module 206 implements a transceiver configured to communicate with the video server 104 (via. a video sharing service provider, such as Bambuser) and the mobile device 102. The communication module 206 communicates with the video server 104 via. the HTTP based network 112 and communicates with the mobile device 102 via the 3G network 106. In operation, the communication module 206 receives request from the mobile device 102 for combining a group of video streams. The communication module 206 also receives a request for broadcasting a video stream selected from a simultaneous preview of the combined video stream. In an example embodiment, the group of video streams corresponds to predefined broadcasts from users of the video server 104, such as, ML1, ML2, ML3 and ML4. In an exemplary implementation, the communications module 206 may employ MediaLooks Flash Source Directshow filter from Adobe Systems to fetch a desired stream from the video server 104 via. a url that points to an flv stream (e.g: http://..../xxx.flv).

The communication module 206 enables the mobile mixing system 110 to receive commands from the mobile application through web service calls. An example of such a command can be a "selectChannel" request sent by the mobile application. The communication module 206 also fetches raw data (e.g., user broadcast location, storage path, time details) from the video server 104. The communication channel between the mobile application and the mobile mixing system 110 is implemented via. a web service that supports one or more web service calls.

The source buffer 208 may corresponds to a flash source object that includes internal buffer utilized for fetching streams from video server 104 to read, parse, and display a video stream. The mobile mixing system 110 also includes additional application software and operating system that supports the video combiner 202 and the switching component 204.

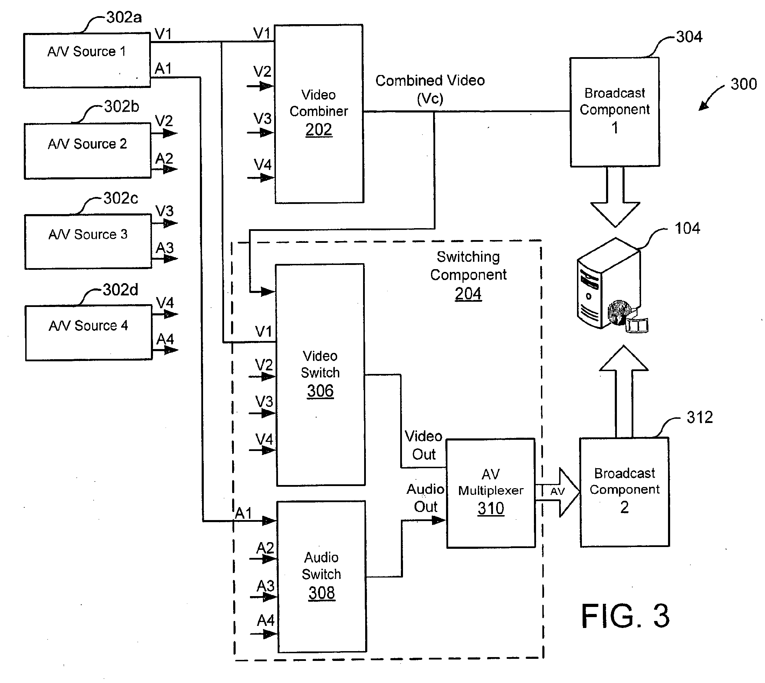

Fig. 3 illustrates a simplified block diagram of the video combiner 202 and the switching component 204 according to an embodiment. On receipt of a request for combining video streams from mobile application, the video combiner 202 would fetch via. the source buffer 208, the video streams that have to be combined based on the video director's selection. In the figure, four audio/video (A/V) sources 302a, 302b, 302c, and 302d have been illustrated that correspond to an example case of four video streams being selected by a video director for an intended preview. The video combiner 202 stitches the four videos together and generates a combined video signal that becomes a broadcast component-1 304. The communication module 206 facilitates the communication of the broadcast component 304 to the video server 104. In an implementation, the video director can listen to audio corresponding to a selected channel (when on broadcast) at the mobile device 102. Further, the video director may also chose to listen to audio corresponding to a video stream during the simultaneous preview of the video streams before selecting the same for broadcasting.

In an implementation of the mobile mixing system 110, the switching component 204 includes a video switch 306 configured to switch to the selected video stream from amongst the group of video streams and the combined video signal (stream). The switching component 204 also includes an audio switch 308 configured to switch to the audio stream corresponding to the selected video stream from amongst audio streams (corresponding to the group of video streams). The switching component 204 further includes an audio-video (AV) multiplexer 310 configured to combine the selected video stream and the corresponding audio stream. In operation, the mobile application selects a video stream to be broadcasted from the simultaneous preview of the group of video streams. Based on this selection, which is communicated to the mobile mixing machine 110, the video switch 306 selects the corresponding video stream (e.g. V1) and the audio switch 308 selects the corresponding audio stream (e.g. A1). The video stream V1 and the audio stream A1 are multiplexed together by the AV multiplexer 310 to produce an audio/video signal that becomes broadcast component-2 312. The broadcast component-2 312 is broadcasted by the communications module 206 to the video server 104.

As discussed earlier, the video director may send a service request such as, a "selectChannel" request, via. a web service. In an implementation, the video director indicates the choice of channel by pressing a button on the mobile device 102. The mobile application transmits the request as a web service call that is received by the video server 104 and relayed to the mobile mixing system 110. The switching component 204 switches the channels from amongst the group of video streams, based on the "selectChannel" request, and sends the output of the AV multiplexer 310 for broadcasting to video server 104.

### Exemplary Mobile Application (Vision Mixer)

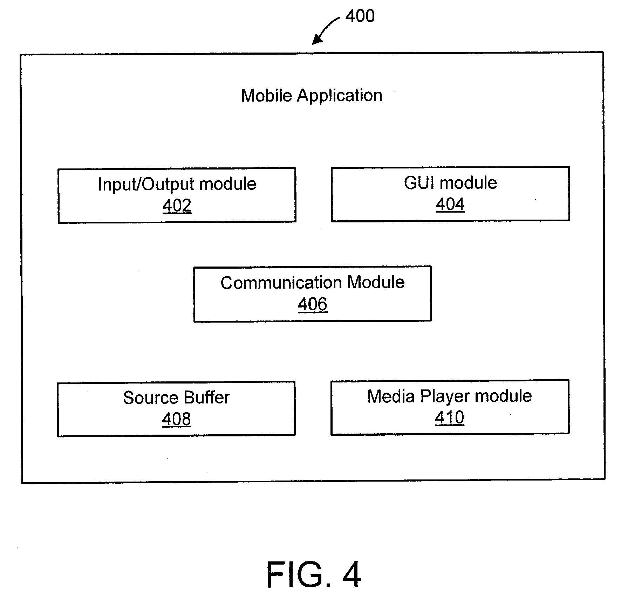

Fig. 4 illustrates a mobile application according to an embodiment. The mobile application can be a software application that executes on the mobile device 102 that acts as the main screen coordinator. The mobile application 400 may correspond to a J2ME application, an Android application, an iOS (i-phone OS) application, or an Adobe Flash Lite application (from Adobe Systems) suitably chosen to provide video direction capabilities to the mobile device 102. The mobile device 102 will have many other applications that can run concurrently without interrupting the mobile application 400. It may be appreciated that the mobile application 400 may be a user invoked (initialized) application that requires an initialization at the time of video production.

In an implementation, the mobile application 400 has an input/output (I/O) module 402 configured to accept a user input to select the group of video streams, to be combined for an intended preview, from plurality of video streams corresponding to the plurality of camera operators. The input/output module 402 enables a user (a video director) to provide inputs to the mobile application 400 by way of pressing keys or buttons provided on the mobile device 102. In alternative embodiments, the user may provide inputs by means of a touch screen (which can act as the display of the mobile device102), audio inputs, a stylus pen, etc.

The mobile application 400 also includes a graphic user interface (GUI) module 404 configured to display the combined video stream on the display screen of the mobile device 102. The combined video stream provides a simultaneous preview of group of video streams on the display screen. The GUI module 404 presents a user interface on the display of the mobile device 102. The I/O module 402 along with the GUI module 404 provides for an interactive video production experience to the video director.
In yet another embodiment, the GUI module 404 is configured to intercept a selection of a video stream from the simultaneous preview of the group of video streams on the display screen of the mobile device 102.

The mobile application 400 also includes a communication module 406 configured to manage the broadcast of requests, notifications, and web service calls from the mobile device 102. In operation, the communications module 206 enables the mobile application 400 to communicate with the camera operators 108 and the mobile mixing system 110 via. the 3G network 106.

The communication module 406 facilitates communication of a request to the mobile mixing system 110 for combining the group of video streams responsive to a user input. The communications module 406 is further configured to receive the combined video stream from the video server 104. In yet another embodiment, the communication module 406 is configured to communicate status information (e.g."on air" status) to one or more of the plurality of camera operators 108 corresponding to the group of video streams.

In an exemplary embodiment, the communication module 406 includes a web service module (not shown) that enables the mobile application 400 to connect to a web service hosted on a web server (not shown). Such a web service supports one or more user commands that the video director can issue during the video production exercise. During initiation of the mobile application 400, the web service module initiates connection and method calls by way of establishing a communication with the web service. An instance of a user command can be a "selectChannel" request that corresponds to the selection of a particular video stream from the group of video streams displayed on the mobile display.

The mobile application 400 also includes a source buffer 408 which is a flash source object that includes internal buffer utilized for fetching streams from video server 104 to read, parse, and display a video stream on the display screen of the mobile device 102.

In operation, initialization step may include initialization of a top layer in Flash Lite object (from Adobe Systems) which displays an overlaid red rectangle together with an "On Air" label that is displayed upon the channel selected by the video director.

The mobile application 400 also includes a media player module 412 that displays the video streams (or files) on the display of the mobile device 102.

The mobile mixing system 110 notifies (during the initialization of the Flash Lite object) the mobile application 400 to fetch the combined video steam from the video server 104. In an implementation, upon receipt of such a notification by the communications module 406, the web service module 410 calls the get Video web method provided by the video server 104. Such a method call returns an XML data that includes value of <URL> node from the XML object. This value points to the combined video stream on the video server 104. The media player module 412 loads this value into a video player object and plays the combined video stream on the display of the mobile device 102. The combined video stream corresponds to a current mixture of 4 live broadcast video streams (predefined ML1, ML2, ML3, and ML4 users).

The input/output module 402 waits for a user input from the video director. In case the video director presses a button on the mobile device 102, the web service module 410 calls the web service "selectChannel" method and passes the digit (1, 2, 3, or 4 in case of 4 video streams in the group of video streams) as the only argument. The GUI module 404 brings a red rectangle over the selected area (video stream), and displays the related "On Air" label on the selected video stream. Through a live preview of the combined video streams, the video director can select any one of the group of video streams to be broadcasted back to the video server 104 as the final output.

The communication module 406 can also transmits a feedback message (e.g.: to say who is "On Air") to one or more camera operators 108 as per the selection of the group of videos for a preview and the selection of the video signal to be broadcasted.

The mobile application 400 maintains a continuous communication with the video server 104 and the mobile mixing system 110. The communication between the mobile application 400 and the camera operators 108 can be through a peer-to-peer network interface. In an alternative embodiment, the mobile application 400 can form a collaborative network environment with the video server 104 (e.g. Bambuser) to support a collaborative video production.

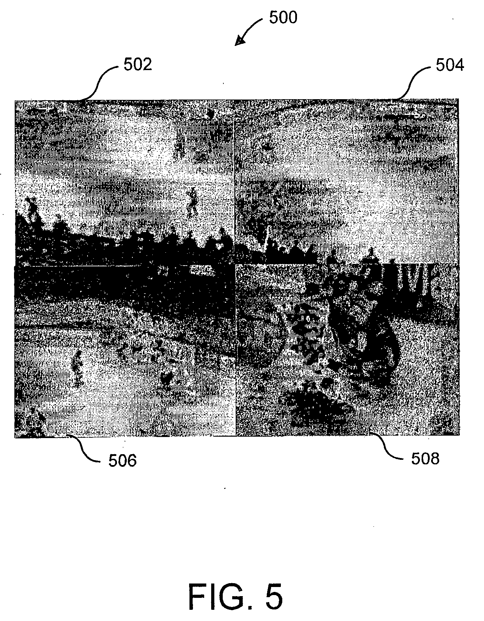

Fig. 5 illustrates an exemplary display 500 of a mobile device that shows the combined video signal (stream) according to an embodiment. As shown, the display has four portions 502, 504, 506, and 508. By way of example, the video director chooses 4 video streams out of a plurality of video streams (e.g. ML1, ML2, M13, ML4, etc.) that are received from the video server 104. The mobile application 400 sends a request to combine the chosen video streams to the mobile mixing system 110 along with the information associated with the video streams. The mobile application 400 simultaneously sends a notification to the camera operators 108 corresponding to the selected video streams informing them to be "on air". The mobile mixing system 110 receives the request and combines the selected video streams to generate a combined video signal or stream. This combined video stream is fetched by the mobile application 400 and displayed on the display of the mobile device 102. Although the figure shows four video streams combined together, it may be appreciated that any number of video streams may be combined and displayed onto the display screen 500 of the mobile device 102. The number of video streams that can be displayed simultaneously on the screen depends at least on the optimum display size, display technology and screen resolution. It may be appreciated that the number of video streams can be chosen in such a manner that enables the video director to make a qualitative choice of a video stream out of the group of video stream to be broadcasted to the video server 104.

As mentioned earlier, the video director can use keys or buttons provided on the mobile device 102 to select/deselect a video stream out of the four displayed on the mobile display 500. The selected video stream will be marked by a red rectangle demarcating the display portion corresponding to the selected video stream from the rest of the display area.

### Exemplary method:

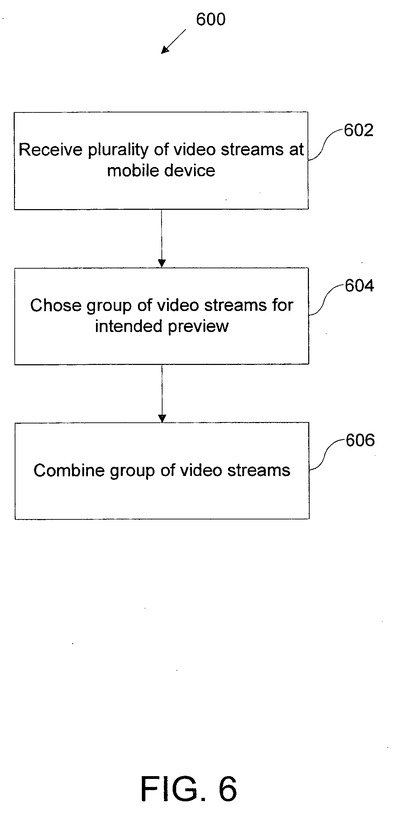

Methods for mobile video mixing will be explained with specific reference to fig. 1, fig. 2, fig. 3, fig. 4, and fig.5. Fig. 6 illustrates an exemplary method 600 for mobile video mixing according to an embodiment.

At block 602, a plurality of video streams is received at a mobile device corresponding to one or more cameras capturing an event. One or more camera operators 108 capture and broadcast to the video server 104 the plurality of video streams. The mobile device 102 fetches the plurality of video streams from the video sever 104. The mobile application 400 hosted in the mobile device 102 displays the received plurality of video streams sequentially on the display (e.g. 500). The video director views the plurality of video streams one by one.

At block 604, a group of video streams intended to be previewed at the mobile device are chosen. The video director chooses a group of video streams from the plurality of video streams. The input/output module 402 enables the video director to select the group of video streams by pressing a key or a button provided on the surface of the mobile device 102. In an implementation, the mobile device 102 transmits a request for combining the group of video streams to the mobile mixing system 110. The request includes information associated with the group of video streams to be combined. The mobile mixing system 110, on receipt of the request and the details of the video streams to be combined, fetches the video streams from the video server 104.

At 606, the group of video streams are combined to generate a combined video signal (stream) such that the combined video signal, when displayed on a display of a mobile device, provides a simultaneous preview of the group of video streams. The video combiner 202 combines the group of video streams fetched from the video server 104 and generates a combined video signal. The mobile mixing system 110 broadcasts the combined video signal to the video server 104 and notifies the mobile application 400 to fetch the combined video stream from the video server 104. The mobile application 400 fetches and displays the combined video stream onto the display of the mobile device 102.

In an exemplary implementation, a video stream to be broadcasted is selected from the simultaneous preview of the group of video streams. The video director, by means of pressing a button or a key, selects a video stream out of the preview of the group of video streams and sends a request to the mobile mixing machine 110 for broadcasting the selected video stream. The switching component 204 is configured to internally switch between channels (group of video streams) based on the selection made by the mobile user (video director). The switching component 204 is also configured to combine the corresponding audio and sends it to the video server 104 for broadcast.

It is to be appreciated that the subject matter of the claims are not limited to the various examples or language used to recite the principle of the invention, and variants can be contemplated for implementing the claims without deviating from the scope. Rather, the embodiments of the invention encompass both structural and functional equivalents thereof.

While certain present preferred embodiments of the invention and certain present preferred methods of practicing the same have been illustrated and described herein, it is to be distinctly understood that the invention is not limited thereto but may be otherwise variously embodied and practiced within the scope of the following claims.

## Claims

1. A method for video mixing in a collaborative mobile environment (100), wherein the collaborative mobile environment (100) comprises a wireless 3G network (106), a wireless hyper text transfer protocol (HTTP) based network (112), a cellular phone (102) hosting a mobile application and communicatively coupled via said wireless 3G network (106), a video server (104) communicatively coupled via said wireless 3G network (106), a mixing system (110) and a plurality of cameras (108a, 108b) arranged to capture a plurality of video streams, the video server (104) being configured to receive said plurality of video streams via said wireless 3G network (106), the method comprising:
receiving, at the video server (104), via said wireless 3G network (106) said plurality of video streams captured by said plurality of cameras (108a, 108b);
combining, in said mixing system (110) communicatively coupled via said wireless HTTP based network to the video server (104), a group of video streams selected from said plurality of video streams to generate a combined video signal, wherein said mixing system is a mobile mixing system (110) communicatively connected to said wireless 3G network (106) and said wireless HTTP based network (112)
receiving a notification at said cellular phone (102) from said mobile mixing system (110) via said wireless 3G network (106), wherein said notification is indicating that a view on said cellular phone can be updated;
the method further comprising; receiving, at the cellular phone (102), via said wireless 3G network (106), the combined video signal from said video server (104)
displaying on a display screen of said cellular phone (102) said combined video signal, which provides a simultaneous preview of the group of video streams in said combined video signal;
receiving input from a user of said cellular phone (102), indicating a selection of one of the group of video streams in the displayed combined video signal
sending, from the cellular phone (102) to the mobile mixing system (110) via said wireless 3G network (106), a notification indicating a video stream selected from the simultaneous preview of said group of video streams;
communicating, from the mobile mixing system (110), the selected video stream to the video server (104) via said wireless HTTP based network (112).

2. The method as claimed in claim 1, wherein number of video streams in the group of video streams corresponds to 4.

3. A system for video mixing in a collaborative mobile environment (100), wherein the collaborative mobile environment (100) comprises a wireless 3G network (106), a wireless hyper text transfer protocol (HTTP) based network (112), a cellular phone (102) hosting a mobile application and communicatively coupled via said wireless 3G network (106), a video server (104) communicatively coupled via said wireless 3G network (106), a mixing system (110) and a plurality of cameras (108a, 108b) arranged to capture a plurality of video streams, the video server (104) being configured to receive said plurality of video streams, via said wireless 3G network (106), the system comprising:
said wireless 3G network (106),
said cellular phone (102) hosting a mobile application and communicatively coupled via said wireless 3G network (106)
said video server (104) communicatively coupled via said wireless 3G network (106),
said mixing system(110)
and said plurality of cameras (108a, 108b) arranged to capture a plurality of video streams, wherein said video server (104) is configured to receive, via said wireless 3G network (106) said plurality of video streams captured by said plurality of cameras (108 a, 108b);
wherein said mixing system (110) is communicatively coupled via said wireless HTTP based network to the video server (104) and configured to combine a group of video streams selected from said plurality of video streams to generate a combined video signal;
**characterized in that**.
said mixing system is a mobile mixing system (110) communicatively connected to said wireless 3G network (106) and said wireless HTTP based network (112)
wherein said cellular phone is configured for receiving a notification from said mobile mixing system (110) via said wireless 3G network (106), wherein said notification is indicating that a view on said cellular phone can be updated;
wherein said cellular phone (102) is configured to receive, via said wireless 3G network (106), the combined video signal from said video server (104),
wherein said cellular phone (102) is configured to display on a display screen said combined video signal, which provides a simultaneous preview of the group of video streams in said combined video signal;
wherein said cellular phone (102) is configured to receive input from a user of said cellular phone (102) indicating a selection of one of the group of video streams in the displayed combined video signal
wherein said cellular phone (102) is configured to send to the mobile mixing system (110), via said wireless 3G network (106), a notification indicating a video stream selected from the simultaneous preview of said group of video streams;
wherein said mobile mixing system (110) is configured to communicate the selected video stream to the video server (104) via said wireless HTTP based network (112).

4. The system as claimed in claim 3, wherein the group of video streams corresponds to four video streams.

5. The system as claimed in claim 3, wherein said mixing system (110) comprises a switching component (204), wherein said switching component comprises:
a video switch configured to switch to the selected video stream from amongst the group of video streams;
an audio switch configured to switch to the audio stream corresponding to the selected video stream from amongst audio streams corresponding to the group of video streams; and
an audio-video multiplexer configured to combine the selected video stream and the corresponding audio stream.

6. A computer program product for video mixing in a collaborative mobile environment (100) in the form of a software application executable on a cellular phone (102), wherein the collaborative mobile environment (100) comprises a wireless 3G network (106), a wireless hyper text transfer protocol (HTTP) based network (112), a cellular phone (102) hosting a mobile application and communicatively coupled via said wireless 3G network (106), a video server (104) communicatively coupled via said wireless 3G network (106), a mixing system (110) and a plurality of cameras (108a, 108b) arranged to capture a plurality of video streams, the video server (104) being configured to receive said plurality of video streams, via said wireless 3G network (106), the computer program product being configured to:
perform the method steps of any of claims 1-2.

## Patentansprüche

1. Verfahren zum Videomischen in einer zusammenwirkenden Mobilumgebung (100), wobei die zusammenwirkende Mobilumgebung (100)
ein drahtloses 3G-Netzwerk (106) umfasst,
ein drahtloses, Hypertext-Transfer-Protokoll- (HTTP) -basiertes Netzwerk (112),
ein Funktelefon (102), das eine Mobilanwendung beherbergt und das über das drahtlose 3G-Netzwerk (106) kommunikativ verbunden ist,
einen Videoserver (104), der über das drahtlose 3G-Netzwerk (106) kommunikativ verbunden ist,
ein Mischsystem (110), und
mehrere Kameras (108a, 108b), die eingerichtet sind, mehrere Videoströme aufzunehmen,
wobei der Videoserver (104) konfiguriert ist, die mehreren Videoströme über das drahtlose 3G-Netzwerk (106) zu empfangen,
wobei das Verfahren umfasst:
Empfangen der mehreren, durch die mehreren Kameras (108a, 108b) aufgenommen Videoströme, über das drahtlose 3G-Netzwerk (106) an dem Videoserver (104),
Kombinieren einer Gruppe von Videoströmen, die unter den mehren Videoströmen ausgewählt wurden, in dem Mischsystem (110), das über das drahtlose, HTTP-basierte Netzwerk kommunikativ mit dem Videoserver (104) verbunden ist, um ein kombiniertes Videosignal zu erzeugen,
wobei das Mischsystem ein mobiles Mischsystem (110) ist, das mit dem drahtlosen 3G-Netzwerk (106) und dem drahtlosen, HTTP-basierten Netzwerk (112) kommunikativ verbunden ist,
Empfangen einer Benachrichtigung von dem mobilen Mischsystem (110) über das drahtlose 3G-Netzwerk (106) an dem Funktelefon (102),
wobei die Benachrichtigung angibt, dass eine Ansicht auf dem Funktelefon aktualisiert werden kann,
wobei das Verfahren weiter umfasst:
Empfangen des kombinierten Videosignals von dem Videoserver (104), über das drahtlose 3G-Netzwerk (106) an dem Funktelefon (102),
Anzeigen des kombinierten Videosignals, das eine gleichzeitige Vorschau der Gruppe von Videoströmen in dem kombinierten Videosignal bereitstellt, auf einem Anzeigeschirm des Funktelefons (102),
Empfangen einer Eingabe von einem Benutzer des Funktelefons (102), die eine Auswahl von einem aus der Gruppe der Videoströme in dem angezeigten kombinierten Videosignal angibt,
Senden einer Benachrichtigung, die einen aus der gleichzeitigen Vorschau der Gruppe von Videoströmen ausgewählten Videostrom angibt, von dem Funktelefon (102) über das drahtlose 3G-Netzwerk (106) an das mobile Mischsystem (110),
Übertragen des ausgewählten Videostroms von dem mobilen Mischsystem (110), über das drahtlose, HTTP-basierte Netzwerk (112), an den Videoserver (104).

2. Verfahren gemäß Anspruch 1, wobei die Anzahl der Videoströme in der Gruppe von Videoströmen 4 entspricht.

3. System zum Videomischen in einer zusammenwirkenden Mobilumgebung (100),
wobei die zusammenwirkende Mobilumgebung (100) umfasst,
ein drahtloses 3G-Netzwerk (106),
ein drahtloses, Hypertext-Transfer-Protokoll- (HTTP) -basiertes Netzwerk (112),
ein Funktelefon (102), das eine Mobilanwendung beherbergt und das über das drahtlose 3G-Netzwerk (106) kommunikativ verbunden ist,
einen Videoserver (104), der über das drahtlose 3G-Netzwerk (106) kommunikativ verbunden ist,
ein Mischsystem (110), und
mehrere Kameras (108a, 108b), die eingerichtet sind, mehrere Videoströme aufzunehmen,
wobei der Videoserver (104) konfiguriert ist, die mehreren Videoströme über das drahtlose 3G-Netzwerk (106) zu empfangen,
wobei das System umfasst:
das drahtlose 3G-Netzwerk (106),
das Funktelefon (102), das eine Mobilanwendung beherbergt und das über das drahtlose 3G-Netzwerk (106) kommunikativ verbunden ist,
den Videoserver (104), der über das drahtlose 3G-Netzwerk (106) kommunikativ verbunden ist,
das Mischsystem (110), und
die mehreren Kameras (108a, 108b), die eingerichtet sind mehrere Videoströme aufzunehmen,
wobei der Videoserver (104) konfiguriert ist, die mehreren, von den mehreren Kameras (108a, 108b) aufgenommenen Videoströme über das drahtlose 3G-Netzwerk (106) zu empfangen,
wobei das Mischsystem (110) über das drahtlose, HTTP-basierte Netzwerk mit dem Videoserver (104) kommunikativ verbunden ist und konfiguriert ist, eine Gruppe von Videoströmen, die aus den mehreren Videoströmen ausgewählt ist, zu kombinieren, um ein kombiniertes Videosignal zu erzeugen,
**dadurch gekennzeichnet, dass**
das Mischsystem ein mobiles Mischsystem (110) ist, das mit dem drahtlosen 3G-Netzwerk (106) und dem drahtlosen, HTTP-basierten Netzwerk (112) kommunikativ verbunden ist,
wobei das Funktelefon konfiguriert ist, eine Benachrichtigung von dem mobilen Mischsystem (110) über das drahtlose 3G-Netzwerk (106) zu empfangen, wobei die Benachrichtigung angibt, dass eine Ansicht auf dem Funktelefon aktualisiert werden kann,
wobei das Funktelefon (102) konfiguriert ist, das kombinierte Videosignal von dem Videoserver (104), über das drahtlose 3G-Netzwerk (106) zu empfangen,
wobei das Funktelefon (102) konfiguriert ist, das kombinierte Videosignal, das eine gleichzeitige Vorschau der Gruppe von Videoströmen in dem kombinierten Videosignal bereitstellt, auf einem Anzeigeschirm anzuzeigen,
wobei das Funktelefon (102) konfiguriert ist, eine Eingabe von einem Benutzer des Funktelefons (102) zu empfangen, die eine Auswahl von einem aus der Gruppe der Videoströme in dem angezeigten kombinierten Videosignal angibt,
wobei das Funktelefon (102) konfiguriert ist, eine Benachrichtigung, die einen aus der gleichzeitigen Vorschau der Gruppe von Videoströmen ausgewählten Videostrom angibt, über das drahtlose 3G-Netzwerk (106) an das mobile Mischsystem (110) zu senden,
wobei das mobile Mischsystem (110) konfiguriert ist, den ausgewählten Videostrom über das drahtlose, HTTP-basierte Netzwerk (112), an den Videoserver (104) zu übertragen.

4. System gemäß Anspruch 3, wobei die Gruppe von Videoströmen vier Videoströmen entspricht.

5. System gemäß Anspruch 3, wobei das Mischsystem (110) eine Schaltkomponente (204) umfasst, und wobei die Schaltkomponente umfasst:
einen Videoschalter, der konfiguriert ist, auf den ausgewählten Videostrom unter der Gruppe von Videoströmen zu schalten,
einen Audioschalter, der konfiguriert ist, auf den Audiostrom zu schalten, der unter den Audioströmen, die der Gruppe von Videoströmen entsprechen, dem ausgewählten Videostrom entspricht, und
einen Audio-Video-Multiplexer, der konfiguriert ist, den ausgewählten Videostrom und den entsprechenden Audiostrom zu kombinieren.

6. Computerprogrammprodukt zum Videomischen in einer zusammenwirkenden Mobilumgebung (100), in Form einer Softwareanwendung, die auf einem Funktelefon (102) ausgeführt werden kann, wobei die zusammenwirkende Mobilumgebung (100) umfasst:
ein drahtloses 3G-Netzwerk (106),
ein drahtloses, Hypertext-Transfer-Protokoll- (HTTP) -basiertes Netzwerk (112),
ein Funktelefon (102), das eine Mobilanwendung beherbergt und das über das drahtlose 3G-Netzwerk (106) kommunikativ verbunden ist,
einen Videoserver (104), der über das drahtlose 3G-Netzwerk (106) kommunikativ verbunden ist,
ein Mischsystem (110), und
mehrere Kameras (108a, 108b), die eingerichtet sind, mehrere Videoströme aufzunehmen,
wobei der Videoserver (104) konfiguriert ist, die mehreren Videoströme über das drahtlose 3G-Netzwerk (106) zu empfangen,
wobei das Computerprogrammprodukt konfiguriert ist, die Verfahrensschritte von einem der Ansprüche 1-2 auszuführen.

## Revendications

1. Procédé pour mixer de la vidéo dans un environnement mobile collaboratif (100), dans lequel l'environnement mobile collaboratif (100) comprend un réseau 3G sans fil (106), un réseau sans fil (112) basé sur de l' Hyper Text Transfert Protocol (HTTP), un téléphone mobile (102) hébergeant une application mobile et connecté de façon communicante au moyen dudit réseau 3G sans fil (106), un serveur vidéo (104) connecté de façon communicante au moyen dudit réseau 3G sans fil (106), un système de mixage (110) et une pluralité de caméras (108a, 108b) agencées pour capter une pluralité de flux de données vidéo, le serveur vidéo (104) étant configuré pour recevoir ladite pluralité de flux de données vidéo via ledit réseau 3G sans fil (106), le procédé comprenant :
le fait de recevoir, au niveau du serveur vidéo (104), via ledit réseau 3G sans fil (106), ladite pluralité de flux de données vidéo capturées par ladite pluralité de caméras (108a, 108b) ;
le fait de combiner, dans ledit système de mixage (110) connecté de façon communicante au moyen dudit réseau sans fil basé sur de l'HTTP au serveur vidéo (104), un groupe de flux de données vidéo sélectionné parmi ladite pluralité de flux de données vidéo de manière à générer un signal vidéo combiné, dans lequel ledit système de mixage est un système de mixage mobile (110) connecté de façon communicante audit réseau 3G sans fil (106) et audit réseau sans fil (112) basé sur du HTTP ;
le fait de recevoir une notification au niveau dudit téléphone mobile (102) depuis ledit système de mixage mobile (110) via ledit réseau 3G sans fil (106), ladite notification indiquant qu'un affichage sur ledit téléphone mobile peut être mis à jour ;
le procédé comprenant en outre :
le fait de recevoir, sur le téléphone mobile (102), via ledit réseau 3G sans fil (106), le signal vidéo combiné provenant dudit serveur vidéo (104)
le fait d'afficher, sur un écran d'affichage dudit téléphone mobile (102), ledit signal vidéo combiné, qui permet une prévisualisation simultanée du groupe de flux de données vidéo dans ledit signal vidéo combiné ;
le fait de recevoir une entrée provenant d'un utilisateur dudit téléphone mobile (102), indiquant une sélection de l'un desdits flux dans le groupe de flux de données vidéo dans le signal vidéo combiné affiché
le fait d'envoyer, depuis le téléphone mobile (102) vers le système de mixage mobile (110) via ledit réseau 3G sans fil (106), une notification indiquant un flux vidéo choisi dans la prévisualisation simultanée dudit groupe de flux de données vidéo ;
le fait de transmettre, à partir du système mobile de mixage (110), le flux vidéo sélectionné vers le serveur de vidéo (104) via ledit réseau sans fil (112) basé sur du HTTP.

2. Le procédé tel que revendiqué dans la revendication 1, dans lequel nombre de flux de données vidéo dans le groupe de flux de données vidéo correspond à 4.

3. Un système pour mixer de la vidéo dans un environnement mobile collaboratif (100), dans lequel l'environnement mobile collaboratif (100) comprend un réseau sans fil de 3G (106), un réseau sans fil (112) basé sur de l'Hyper Text Transfert Protocol (HTTP), un téléphone mobile (102) hébergeant une application mobile et connecté de façon communicante au moyen dudit réseau 3G sans fil (106), un serveur vidéo (104) connecté de façon communicante au moyen dudit réseau 3G sans fil (106), un système de mixage (110) et une pluralité de caméras (108a, 108b) agencées pour capter une pluralité de flux de données vidéo, le serveur vidéo (104) étant configuré pour recevoir ladite pluralité de flux vidéo, via ledit réseau 3G sans fil (106), le système comprenant :
ledit réseau 3G sans fil (106),
ledit téléphone mobile (102) hébergeant une application mobile et connecté de façon communicante au moyen dudit réseau 3G sans fil (106)
ledit serveur vidéo (104) connecté de façon communicante au moyen dudit réseau 3G sans fil (106),
ledit système de mixage (110)
et ladite pluralité de caméras (108a, 108b) agencée pour capturer une pluralité de flux vidéo, dans lequel ledit serveur vidéo (104) est configuré pour recevoir, via ledit réseau 3G sans fil (106), ladite pluralité de flux de données vidéo capturées par ladite pluralité de caméras (108a, 108b) ;
ledit système de mixage (110) étant connecté de façon communicante au moyen dudit réseau sans fil basé sur de l'HTTP au serveur vidéo (104) et étant configuré de façon à combiner un groupe de flux de données vidéo sélectionné dans ladite pluralité de flux de données vidéo afin de générer un signal vidéo combiné ;
**caractérisé en ce que**.
ledit système de mixage est un système de mixage mobile (110) connecté de façon communicante audit réseau 3G sans fil (106) et audit réseau sans fil (112) basé sur de l'HTTP
ledit téléphone mobile étant configuré pour recevoir une notification provenant dudit système de mixage mobile (110) via ledit réseau 3G sans fil (106), ladite notification indiquant qu'il y a un affichage sur ledit téléphone mobile qui peut être mis à jour ;
ledit téléphone mobile (102) étant configuré pour recevoir, via ledit réseau 3G sans fil (106), le signal vidéo combiné provenant dudit serveur vidéo (104),
ledit téléphone mobile (102) étant configuré pour afficher, sur un écran d'affichage, ledit signal vidéo combiné, lequel fournit une prévisualisation simultanée du groupe de flux de données vidéo dans ledit signal vidéo combiné ;
ledit téléphone mobile (102) étant configuré pour recevoir une entrée provenant d'un utilisateur dudit téléphone mobile (102) indiquant une sélection d'un flux parmi le groupe de flux de données vidéo dans le signal vidéo combiné affiché
ledit téléphone mobile (102) étant configuré pour envoyer au système de mixage mobile (110), via ledit réseau 3G sans fil (106), une notification indiquant un flux de données vidéo sélectionné dans la prévisualisation simultanée dudit groupe de flux de données vidéo ;
ledit système de mixage mobile (110) étant configuré pour transmettre le flux vidéo sélectionné vers le serveur vidéo (104) via ledit réseau sans fil (112) basé sur de l'HTTP.

4. Le système selon la revendication 3, dans lequel le groupe de flux vidéo correspond à quatre flux vidéo.

5. Le système selon la revendication 3, dans lequel ledit système de mixage (110) comprend un composant de commutation (204), cet élément de commutation comprenant :
un commutateur vidéo configuré de manière à se commuter sur le flux de vidéo sélectionné parmi le groupe de flux de données vidéo ;
un commutateur audio configuré de manière à se commuter sur le flux de données audio correspondant au flux vidéo sélectionné parmi les flux audio correspondant au groupe de flux de données vidéo, et
un multiplexeur audio-vidéo configuré pour combiner le flux vidéo sélectionné et le flux de données audio correspondant.

6. Un produit de programme d'ordinateur destiné à mixer de la vidéo dans un environnement mobile collaboratif (100) sous la forme d'un fichier exécutable d'application logicielle sur un téléphone mobile (102), dans lequel l'environnement mobile collaboratif (100) comprend un réseau 3G sans fil (106), un réseau sans fil (112) basé sur de l'Hyper Text Transfert Protocol (HTTP), un téléphone mobile (102) hébergeant une application mobile et connecté de façon communicante au moyen dudit réseau 3G sans fil (106), un serveur vidéo (104) connecté de façon communicante au moyen dudit réseau 3G sans fil (106), un système de mixage (110) et une pluralité de caméras (108a, 108b) agencées pour capter une pluralité de flux de données vidéo, le serveur vidéo (104) étant configuré pour recevoir ladite pluralité de flux vidéo, via ledit réseau 3G sans fil (106), le produit de programme informatique étant configuré pour :
Mettre en oeuvre les étapes du procédé selon l'une quelconque des revendications 1 ou 2.
